(19) Europäisches Patentamt
European Patent Office
Office européen des brevets

(11) **EP 3 530 403 B1**

(12) **EUROPEAN PATENT SPECIFICATION**

(45) Date of publication and mention
of the grant of the patent:
**09.12.2020 Bulletin 2020/50**

(51) Int Cl.:
***B23Q 3/06*** *(2006.01)*          ***G01M 7/00*** *(2006.01)*

(21) Application number: **18460012.0**

(22) Date of filing: **26.02.2018**

(54) **A METHOD OF CHOOSING AN OPTIMAL CLAMP TORQUE FOR FASTENING A FLEXIBLE WORKPIECE MAINLY FOR A FACE MILLING PROCESS**

VERFAHREN ZUR WAHL EINES OPTIMALEN DREHMOMENTS DER KLEMME ZUR BEFESTIGUNG EINES FLEXIBLEN WERKSTÜCKS HAUPTSÄCHLICH BEI EINEM PLANFRÄSVERFAHREN

PROCÉDÉ DE CHOIX D'UN COUPLE DE SERRAGE OPTIMAL POUR LA FIXATION D'UNE PIÈCE À USINER FLEXIBLE PRINCIPALEMENT LORS D'UN PROCESSUS DE FRAISAGE FRONTAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2018 PL 42465818**

(43) Date of publication of application:
**28.08.2019 Bulletin 2019/35**

(73) Proprietor: **Politechnika Gdanska**
**80-233 Gdansk (PL)**

(72) Inventors:
• **Kalinski, Krzysztof**
**80-807 Gdansk (PL)**
• **Galewski, Marek**
**80-041 Gdansk (PL)**
• **Mazur, Michal**
**80-281 Gdansk (PL)**
• **Dziewanowski, Leszek**
**81-820 Sopot (PL)**
• **Morawska, Natalia**
**81-111 Gdynia (PL)**

(74) Representative: **Pawlowska, Justyna**
**Gdansk University of Technology**
**ul. G. Narutowicza 11/12**
**80-233 Gdansk (PL)**

(56) References cited:
**GB-A- 2 447 278**

• **Marek Chodnicki: "NADZOROWANIE DRGA PODCZAS FREZOWANIA PRZEDMIOTÓW PODATNYCH Z WYKORZYSTANIEM AKTYWNEGO STEROWANIA OPTYMALNEGO", Doktorska Rozprawa, 1 January 2011 (2011-01-01), XP055701383, Retrieved from the Internet: URL:https://pbc.gda.pl/Content/16668/phd_c hodnicki_marek.pdf [retrieved on 2020-06-05]**
• **Marek Galewski: "Nadzorowanie drgan podczas frezowania szybkosciowego smuklymi narzedziami z wykorzystaniem zmiennej predkosci obrotowej wrzeciona", , 1 January 2007 (2007-01-01), XP055701385, POLITECHNIKA GDANSKA Retrieved from the Internet: URL:https://pbc.gda.pl/Content/3887/phd_ga lewski.pdf?handler=pdf [retrieved on 2020-06-05]**

EP 3 530 403 B1

**Description**

The subject of the invention is a method of choosing an optimal clamp of fastening flexible workpiece mainly at face milling process, applicable to shape or finishing treatment of cutting mainly high dimensional workpieces, on multiaxial production centres.

Vibration appearing along direction of cutting depth during face milling in shape or finishing treatment of flexible workpieces causes that the machined in series details demonstrate the surface ununiformed due to existence of the occurred inaccuracies. Patent Document GB2447278A discloses a clamping device that absorbs cutting vibrations.

During the performed scientific and research works in Gdansk University of Technology, concerned determination of the optimal cutting conditions of the flexible workpieces, on a basis of frequency and amplitude spectrum observation there was set down relation of that vibration to conditions of fastening the workpiece on the machine tool's table, see for example doctoral thesis "Nadzorowanie drga podczas frezowania przedmiotów podatnych z wykorzystaniem aktywnego sterowania optymalnego" by Marek Chodnicki and "Nadzorowanie drgan podczas frezowania szybkosciowego smuklymi narzedziami z wykorzystaniem zmiennej predkosci obrotowej wrzeciona" by Marek Galewski.

The method of choosing an optimal clamp of fastening flexible workpiece mainly at face milling process, based on the invention, is characterised that in the first step chosen workpiece is fixed to the machine tool's table with the use of fastening screws, under the first steady screws' tightening torque, then in the place of expected machining the worpiece is excited with the use of the favourably modal hammer, and, in a known manner, frequency is measured and vibration amplitude spectrum is registered. Next, the cost function values are calculated which corresponds to the work of cutting forces in the direction of cutting layer width, using following formula:

$$L = \sum_{\alpha=1}^{i_\alpha} b_D f_\alpha^2 \frac{\frac{\pi n}{30}}{\left(\frac{n}{60}\right)^2 - f_\alpha^2} \sin\left(\frac{2\pi n}{60 f_\alpha}\right)$$

where:

$\alpha$ - amplitude spectrum peak number,
$i_\alpha$ - number of the identified amplitude spectrum peaks,
$b_D$ - nominal cutting layer width [mm],
$f_\alpha$ - frequency of amplitude spectrum peak no. $\alpha$ [Hz],
$n$ - spindle speed [rev/min].

In the second step, the second screw tightening torque is set down and in such conditions of clamping the first step is repeated. Next the respective steps are repeated for a finite number of technologically justified screws tightening torques and the required torque with the lowest value of the cost function $L$, which corresponds to the work of cutting forces in the direction of cutting layer width, is selected.

The search for the minimum value of the work of cutting forces in the direction of cutting layer width $b_D$, for $i_\alpha$ frequencies identified in amplitude spectrum and selected time interval $T$ appeared to be exceptionally beneficial for the purpose of setting down the torque which should be used for tightening the workpiece mounting screws for vibration minimization, mainly in the case of milling flexible details.

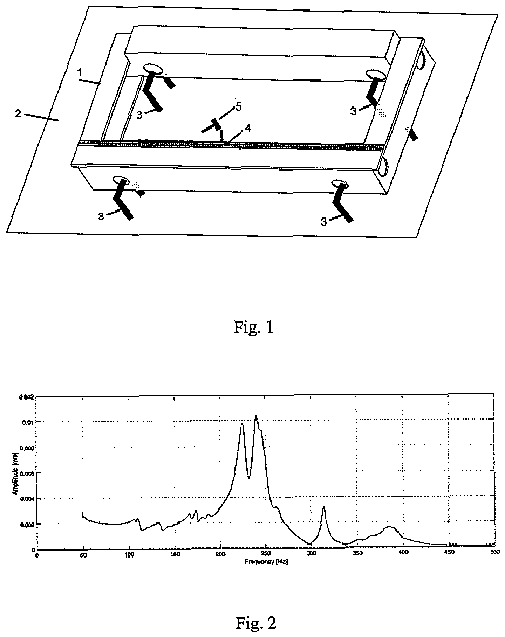

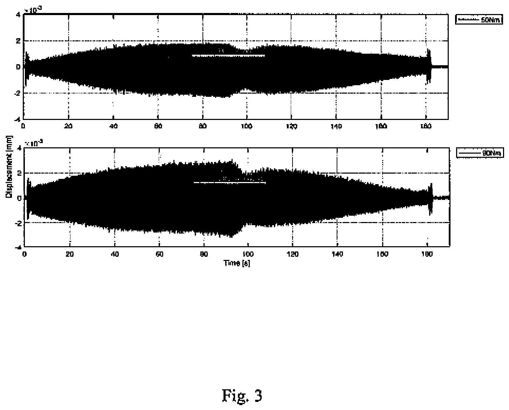

The invention is described closer by the case study shown in fig. 1, which schematically presents, with the use of an axonometric view, the workpiece mounted on the machine tool table with the attached vibration sensor. Fig. 2. presents an amplitude spectrum for screw tightening torque 70 Nm and fig 3. presents workpiece's displacements for torques 50 Nm and 90 Nm.

The workpiece 1 is clamped on the machine tool table 2 using screws 3. In the desired place of milling, an accelerometer 4 was attached. Next, screws 3 were tightened with torque 50 Nm and in the place of planed milling the workpiece 1 was excited using hammer 5 which can be a modal hammer 5. In a known manner, the frequency was measured and the amplitude spectrum of vibration was acquired, and next using the formula:

$$L = \sum_{\alpha=1}^{i_\alpha} b_D f_\alpha^2 \frac{\frac{\pi n}{30}}{\left(\frac{n}{60}\right)^2 - f_\alpha^2} \sin\left(\frac{2\pi n}{60 f_\alpha}\right)$$

where:

$\alpha$ - amplitude spectrum peak number,
$i_\alpha$ - number of the identified amplitude spectrum peaks,
$b_D$ - nominal cutting layer width [mm],
$f_\alpha$ - frequency of amplitude spectrum peak no. $\alpha$ [Hz],
$n$ - spindle speed [rev/min].

the cost function L values were calculated, which correspond to the work of cutting forces in the direction of cutting layer width. Then the same steps were performed for tightening all screws 3 with torque of 70 Nm, 90 Nm, 110 Nm and 130 Nm. The results of the cost function $L$ values prediction, showing the most advantageous conditions of fastening the workpiece to the tool machine table, are presented in tab. 1.

| Tightening torque of fastening screws [Nm] | $n$ [rev/min] | $b_D$ [mm] | $f_1$ [Hz] | $f_2$ [Hz] | $f_3$ [Hz] | $f_4$ [Hz] | $f_5$ [Hz] | $f_6$ [Hz] | $f_7$ [Hz] | $L$ [mm rad/s] |
|---|---|---|---|---|---|---|---|---|---|---|
| 50 | 1300 | 1 | 133,0 | 173,5 | 224,5 | 240,5 | 261,5 | 314,0 | 385,0 | -541,997 |
| 70 | 1300 | 1 | 133,5 | 174,0 | 226,5 | 248,0 | 263,0 | 315,5 | 365,0 | -540,690 |
| 90 | 1300 | 1 | 133,5 | 175,0 | 231,5 | 250,5 | 265,0 | 317,0 | 371,0 | -536,570 |
| 110 | 1300 | 1 | 133,5 | 175,5 | 235,0 | 252,0 | 265,0 | 318,5 | 373,0 | -534,426 |
| 130 | 1300 | 1 | 134,0 | 172,5 | 234,5 | 251,5 | 265,5 | 318,5 | 372,5 | -535,717 |

Tab. 1. Predicted values of cost function $L$ for different screws tightening torque

Screws 3 are tightened with a torque of 50 Nm, for which the cost function L approaches minimum.

**Claims**

1. A method of choosing an optimal clamp torque for fastening a flexible workpiece to be cut, for example by a face milling process, featured by that in a first step, the workpiece is fastened to a machine tool's table with the use of fastening screws under a first steady screws' tightening torque, then the workpiece is excited with the use of a favourably modal hammer, and frequency is measured and vibration amplitude spectrum is registered, and next the cost function corresponding to the work of cutting forces in the direction of cutting layer width, is determined using following formula

$$L = \sum_{\alpha=1}^{i_\alpha} b_D f_\alpha^2 \frac{\frac{\pi n}{30}}{\left(\frac{n}{60}\right)^2 - f_\alpha^2} \sin\left(\frac{2\pi n}{60 f_\alpha}\right)$$

where:

$\alpha$ - amplitude spectrum peak number,
$i_\alpha$ - number of the identified amplitude spectrum peaks,
$b_D$ - nominal cutting layer width, in mm
$f_\alpha$ - frequency of amplitude spectrum peak no. $\alpha$, in Hz
$n$ - spindle speed in rev/min after that, in a second step, the second screw tightening torque is set down and in such defined conditions of clamping it is done as in the first step, and next the respective steps are repeated for a finite number of screws tightening torques, whereas the required clamp torque is selected for which a value of the work of cutting forces in the direction of cutting layer width, in the other words the cost function L, is minimal.

**Patentansprüche**

1. Verfahren zur Wahl eines optimalen Drehmoments der Klemme zur Befestigung eines flexiblen Werkstücks hauptsächlich bei einem Planfräsverfahren, welches sich dadurch auszeichnet, dass das Werkstück im ersten Schritt mit Befestigungsschrauben unter den Bedingungen des ersten festgelegten Drehmoments der Schrauben auf dem Maschinentisch fixiert wird, dann wird das Werkstück mit dem günstigen Modalhammer angeregt woraufhin die Frequenz gemessen und das Schwingungsamplitudenspektrum aufgezeichnet wird, dann wird die Zielfunktion bestimmt, die der Arbeit der Schnittkräfte in Richtung der Breite der Schneideschicht entspricht, unter Verwendung der folgenden Formel:

$$L = \sum_{\alpha=1}^{i_\alpha} b_D f_\alpha^2 \frac{\frac{\pi n}{30}}{\left(\frac{n}{60}\right)^2 - f_\alpha^2} \sin\left(\frac{2\pi n}{60 f_\alpha}\right)$$

wobei entsprechen:

$\alpha$ - Nummer der Spitze im Amplitudenspektrum
$i_\alpha$ - Anzahl der identifizierten Spitzen im Amplitudenspektrum
$i_\alpha$ - Nennbreite der geschnittenen Schicht, in mm
$f_\alpha$ - Frequenz der Spitze Nr. $\alpha$ im Amplitudenspektrum, in Hz
$n$ - Spindeldrehzahl in U/min

dann wird im zweiten Schritt ein zweites Drehmoment der Schrauben bestimmt und unter diesen spezifizierten Befestigungsbedingungen das gleiche Verfahren wie im Schritt eins angewendet und dann werden die einzelnen Schritte für eine endliche Anzahl von Drehmomenten der Schrauben wiederholt und dann wird dieses Drehmoment der Schrauben gewählt, bei dem der Wert der Schnittkräftearbeit in Richtung der Breite der Schncidschicht, d. h. die L-Zielfunktion, am geringsten ist.

**Revendications**

1. Procédé de choix d'un couple de serrage optimal pour la fixation d'une pièce à usiner flexible pricipalement lors d'un processus de fraisage frontal, **caractérisé en ce que**, dans un premier pas, la pièce à usiner en cause est fixée au table de machine-outil à l'aide de vis de fixation en premier état de régime permanent de couple de serrage, ensuite la pièce à usiner est excitée à l'aide d'un marteau modal favorable, après quoi on mesure la fréquence et on enregistre le spectre d'amplitude de vibrations, et ensuite on détermine la fonction objectif correspondant au travail des efforts de coupe en direction de largeur de couche à découper à partir de la formule :

$$L = \sum_{\alpha=1}^{i_\alpha} b_D f_\alpha^2 \frac{\frac{\pi n}{30}}{\left(\frac{n}{60}\right)^2 - f_\alpha^2} \sin\left(\frac{2\pi n}{60 f_\alpha}\right)$$

où :

$\alpha$ - numéro du pic dans le spectre d'amplitude
$i_\alpha$ - nombre de pics identifiés dans le spectre d'amplitude
$b_D$ - largeur nominale de couche à découper, en mm
$f_\alpha$ - fréquence du pic n° $\alpha$ dans le spectre d'amplitude, en Hz
$n$ - vitesse de broche, en tr/min

après quoi, dans un deuxième pas, on établit un deuxième couple de serrage des vis et dans de telles conditions définies de fixation on procède comme dans un premier pas, et ensuite on répète des pas respectifs pour un nombre fini de couple de serrage des vis, après quoi on choisit un moment de couple de serrage des vis, pour lequel la valeur du travail des efforts de coupe en direction de largeur de couche à découper, soit la fonction objectif L, est minimale.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2447278 A